# EUROPEAN PATENT APPLICATION

(11) **EP 4 791 115 A1**
(43) Date of publication of application: **12.08.2026**
(21) Application number: 26155917.3
(22) Date of filing: 03.02.2026
(51) Int. Cl.: H04W 84/12, H04W 16/10, H04W 28/02, H04W 72/541, H04W 72/20, H04J 11/00

(54) **IMPROVED CONGESTION MITIGATION WITH STATION ASSISTED NON-PRIMARY CHANNEL ACCESS OPERATION**

(30) Priority: 07.02.2025 IN 202521010265; 16.05.2025 US 202519210043
(71) Applicant: Avago Technologies International Sales Pte. Limited, Singapore 768923 (SG)
(72) Inventor: TADAHAL, Shivkumar Basavaraj, Irvine, 92618 (US); KAMATH, Manoj RAVEENDRANATH, Irvine, 92618 (US); GUPTA, Raghvendra, Irvine, 92618 (US); VERMA, Sindhu, Irvine, 92618 (US); ADHIKARI, Shubhodeep, Irvine, 92618 (US)
(74) Representative: Dilg, Haeusler, Schindelmann Patentanwaltsgesellschaft mbH

(57) **Abstract**

In some implementations, a device may include a transmitter associated with an access point (AP) corresponding to a basic service set (BSS) selectively operating in one of a first frequency range or a second range. The one or more processors may be configured to determine that the AP operates in the second frequency range. The one or more processors may be configured to determine that the transmitter has a limitation in transmitting using the second frequency range. The one or more processor may be configured to transmit, to the transmitter via the AP, a request to generate a frame including a recommended frequency range that is different from the first frequency range. The one or more processors may be configured to generate the frame including a recommended frequency range. The one or more processors may be configured to transmit, to the AP via the transmitter, the generated frame.

## Description

### Cross-Reference to Related Applications

### Field of the Disclosure

This disclosure generally relates to systems and methods for congestion mitigation using station assisted non-primary channel access (NPCA) operations.

### Background of the Disclosure

Wireless communication standards, such as 802.11bn (ultra-high-reliability (UHR)), proposes a Non-Primary Channel Access (NPCA) feature where an NPCA-capable UHR) access point (AP) uses an NPCA primary channel for scheduling TX (transmit) and RX (receive) operations when the Basic Service Set (BSS) primary channel is occupied due to any overlapping BSS (OBSS) traffic. The NPCA primary channel may be predefined or selected by a UHR AP. Associated non-AP NPCA-capable UHR stations (STAs) can use the NPCA primary channel specified by the UHR AP for the NPCA-based TX and RX operations when there are limitations with the BSS primary channel, such as OBSS interference.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIGS. 1B and 1C are block diagrams depicting computing devices useful in connection with the methods and systems described herein, according to some embodiments.
FIG. 2 is a block diagram of an embodiment of overlapping BSS operations between access points.
FIGS. 3A and 3B are block diagrams of embodiments of STA assisted NPCA operations.
FIG. 4 is a block diagram of an embodiment of a set of channels that an AP may transmit data over.
FIG. 5 is a flowchart showing a process for mitigating congestions utilizing NPCA operations.

The details of various embodiments of the methods and systems are set forth in the accompanying drawings and the description below.

### Detailed Description

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

Various embodiments disclosed herein relate to a device including a transmitter associated with an access point (AP) corresponding to a basic service set (BSS) selectively operating in one of a first frequency range or a second range. The one or more processors may be configured to determine that the AP operates in the second frequency range. The one or more processors may be configured to determine that the transmitter has a limitation in transmitting using the second frequency range. The one or more processors may be configured to generate a frame including a recommended frequency range that is different from the first frequency range and the second frequency range. The one or more processors may be configured to transmit, to the AP via the transmitter, the generated frame.

In some implementations, the frame may be a management frame or a vendor-specific action frame.

In some implementations, wherein the limitation may be due to an interference with an overlapping BSS (OBSS).

In some implementations, the frame may include at least one of a frequency range, a BSS identifier (BSSID), a BSS color, a received signal strength indicator (RSSI) of the OBSS.

In some implementations, the one or more processors may be further configured to receive, from the AP, a second frame indicating to accept or reject the recommended frequency range.

In some implementations, the one or more processors may be further configured to set the second frequency range to the recommended frequency range in response to the second frame indicating to accept the recommended frequency range.

In some implementations, the one or more processors may be further configured to perform at least one of operations including setting the second frequency range to the recommended frequency range, associating with another AP different from the AP, and adjusting one or more transmission (TX) parameters in response to the second frame indicating to reject the recommended frequency range.

Standards within IEEE 802.11 allow APs to set a NPCA primary channel that can be used in place of a BSS primary channel when there are limitations, such as OBSS interference, on the BSS primary channel. This can allow the AP to avoid issues such as long medium contention times and data packet collisions that can occur when there is OBSS interference with the BSS of another AP. In some examples the NPCA primary channel can be selected by the AP based on detected transmissions. For example, an AP may detect that another AP is operating on a certain channel, and may therefore select an NPCA that does not overlap with this channel. However, the AP may not be able to detect OBSS interference that it is not within range of. For example, the AP may not be able to detect OBSS interference where it is not within range of the interference but one or more associated STAs (e.g., non-AP STAs) are. In this example, the AP may select an NPCA primary channel that still has OBSS interference, as it may not be able to detect which channels the OBSS interference is occurring on.

Embodiments in the present disclosure have at least the following advantages and benefits. Embodiment in the present disclosure can provide systems and methods for mitigating OBSS interference that is hidden to the AP. OBSS interference may be hidden to the AP when associated STAs are within range of the interference, but the AP is not. When the AP is not within range of the OBSS interference, it may not be able to determine which channels there is OBSS interference on. As a result, it may be difficult and/or inefficient to set an NPCA primary channel that can be used instead of the BSS primary channel, since the AP may accidentally select an alternative channel that still has OBSS interference. To resolve this problem, STAs may transmit a frame that provides information about the interference and/or a recommendation of a new frequency range. For example, the frame can indicate which channels an STA has detected interference on, an identifier (e.g., BSSID) associated with detected interference, and/or the like. The AP can use this information to adjust selections, such as a new NPCA frequency range. Additionally, or alternatively, the STA can recommend a new NPCA frequency range, which the AP can choose to reject or accept and designate as the new NPCA primary channel. As a result, communications between the AP and the STA can be adjusted to mitigate OBSS interference, even when the OBSS interference is not visible to the AP responsible for managing communication settings.

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} through IEEE P802.11bn^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes embodiments of systems and methods for congestion mitigation using station assisted non-primary channel access (NPCA) operations.

### A. Computing and Network Environment

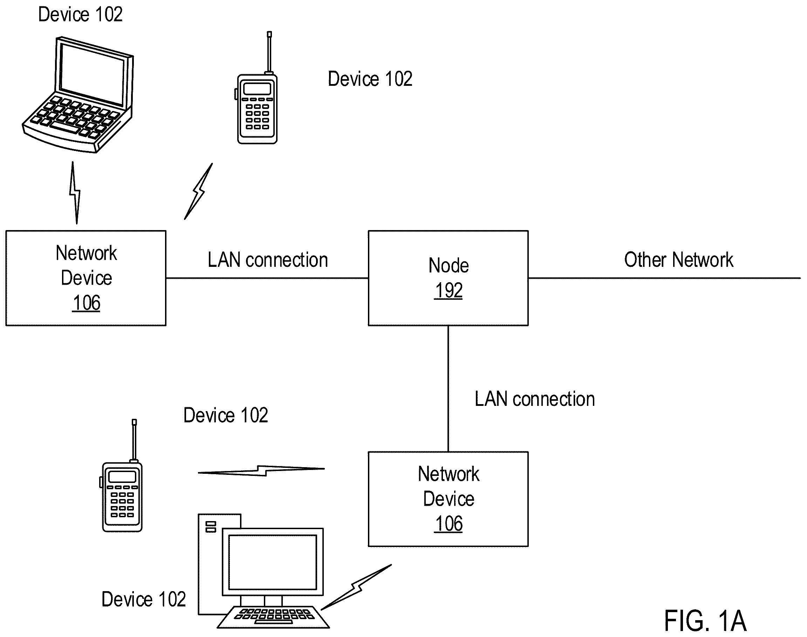

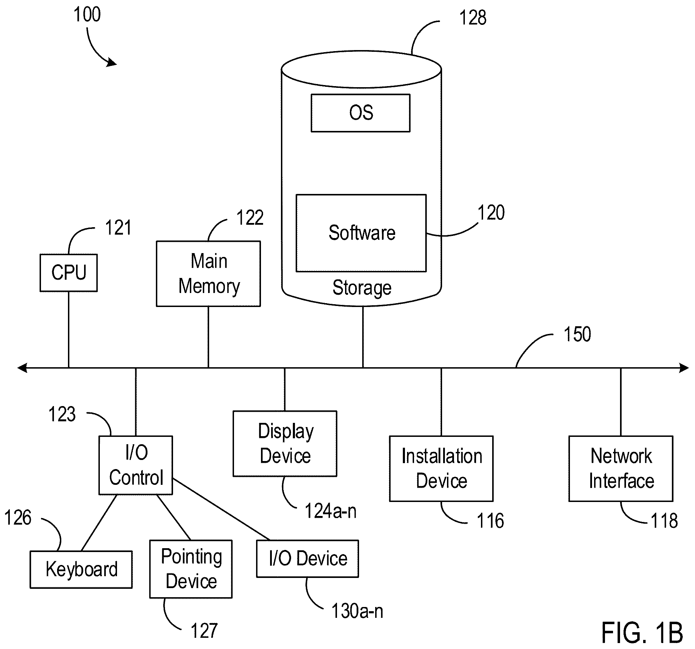

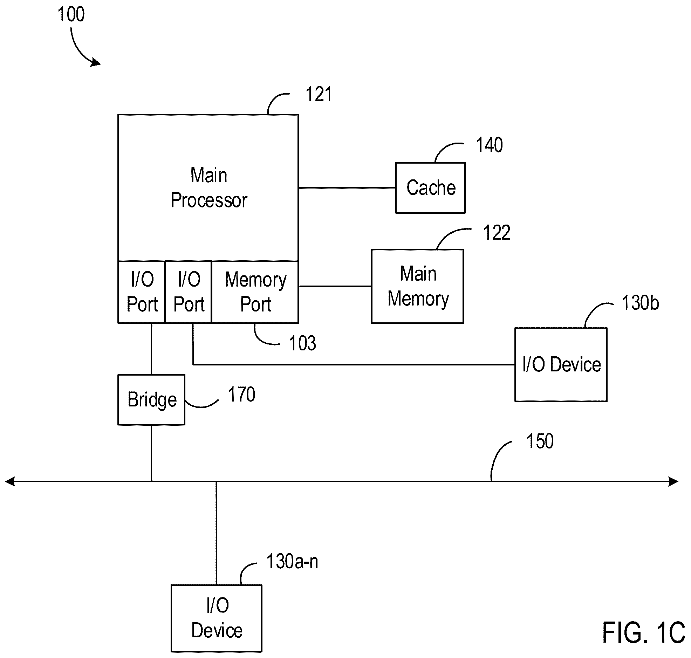

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above-described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a Micro Channel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, track pads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a Fibre Channel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. CONGESTION MITIGATION WITH STA ASSISTED NPCA OPERATION

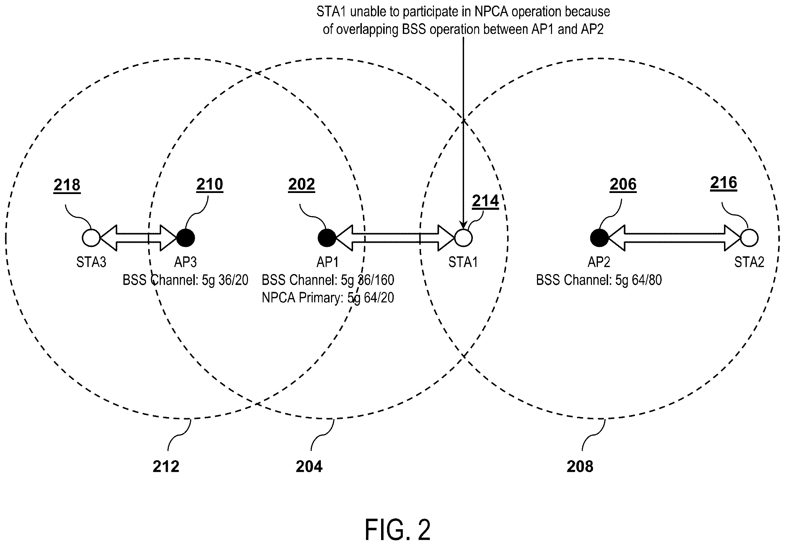

FIG. 2 is a block diagram of an embodiments of overlapping BSS operations between APs. The APs can include a first AP 202, second AP 206, and third AP 210. Each AP can have a physical range. The physical range can indicate an area within which an AP can reliably provide and receive transmissions to STAs. For example, the first AP 202 can communicate within a first range 204 to a first STA 214, the second AP 206 can communicate within a second range 208 to a second STA 216, and the third AP 210 can communicate within a third range 212 to a third STA 218. In an example, the first STA 214, second STA 216, and third STA 218 can be non-AP STAs (e.g., such as device 102 of FIG. 1A) that connect to a wireless network through their respective APs (e.g., network hardware 192 of FIG. 1A).

In some embodiments, an AP can be associated with a set of Basic Service Set (BSS) channels, one of which can be designated as its BSS primary channel. The BSS channels can define set of channels within a frequency band (e.g., 2.4 GHz). The set of channels can define specific frequencies within the frequency band at which data can be communicated. In an example, the AP may be associated with a BSS primary channel that indicates a channel (e.g., 20 MHz channel) and a bandwidth indicating how many channels are bonded together for transmissions on the BSS primary channel (e.g., 8 channels for a bandwidth of 160 MHz). For example, the BSS primary channel of the first AP 202 may be channel 36/160 (e.g., channel 36, 160 MHz width) within the 5G band, the BSS primary channel of the second AP 206 may be channel 64/80 (e.g., channel 64, 80 MHz width) within the 5G band, and the BSS primary channel of the third AP 210 may be 36/20 (e.g., channel 36, 20 MHz width) within the 5G band. The BSS primary channel may be selected based on factors such as signal strength, interference levels, and network performance. In some examples, the BSS primary channel of an AP may be manually selected. Additionally, or alternatively, the BSS primary channel may be selected by the AP (e.g., based on an algorithm, and/or the like). The BSS primary channel can represent the initial channel that an AP uses to transmit information.

In some embodiments, the ranges representing areas within which the APs can reliably transmit and receive data may overlap. For example, the first range 204 of the first AP 202 and the second range 208 of the second AP 206 overlap, as do the first range 204 and the third range 212 of the third AP 210. Transmissions where the AP and/or the STA are located in an area where the ranges of two APs overlap may result in interference. For example, transmissions of the third AP 210 to the third STA 218 over channel 36/160 can interfere with transmissions of the first AP 202 to the first STA 214 over channel 36/20. Similarly, transmissions of the second AP 206 to the second STA 216 over channel 64/80 can interfere with transmissions of the first AP 202 to the first STA 214 over channel 64/20. Specifically, network connections in overlapping regions that use the same channel may experience issues such as increased error rates and connection drops due to interference phenomena such as packet collisions and long media contention times.

In some embodiments, the APs (e.g., the first AP 202, second AP 206, and third AP 210) and the STAs (e.g., the first STA 214, second STA 216, and third STA 218) may have capabilities for Non-Primary Channel Access (NPCA) feature. NPCA may be a protocol defined in the Institute of Electrical and Electronics Engineers (IEEE) 802.11 Ultra-High Reliability (UHR) Group. In an example, the APs and the STAs may include UHR capabilities. As a result they may support one or more UHR features that allow for more efficient and/or reliable communications. NPCA may be one of the UHR features that the APs and the STAs support. NPCA may allow an STA (e.g., AP or Non-AP) to schedule a TX and/or RX operation through a channel other than the BSS primary channel (e.g., an NPCA primary channel) when the BSS primary channel is occupied. For example, In response to detecting interference (due to the transmissions of the third AP 210 to the third STA 218) on its primary channel (e.g., channel 36), the first AP 202 may select to use a non-primary channel (e.g., channel 64) for transmissions. In an example, the first AP 202 may transmit a frame, such as a beacon frame, to the first STA 214 to indicate that the NPCA primary channel will be used for communications.

In some embodiments, an STA may indicate that it is unable to operate on the NPCA primary channel. For example, the first STA can indicate that it is unable to operate on channel 64 due to interference from communications between the second AP 206 and the second STA 216. In this example, the first STA 214 may generate a frame that recommends an alternative channel (e.g., channel 48 at 20 MHz) to the first AP 202. The first STA 214 may transmit this recommendation frame in response to receiving a beacon frame from the first AP 202 indicating that the non-primary channel will be used for communications. Additionally, or alternatively, the frame can include other information about the OBSS interference, such as an identifier of the BSS (e.g., BSSID) that is generating the interference, a range of the interference, and/or the like. In an example, the first STA 214 may transmit the recommendation frame in response to receiving a poll from the first AP 202. For example, the first AP 202 can poll the first STA 214 for a recommended channel. In response to this poll, the first AP 202 can execute communications with the first STA 214. over the recommended channel. In this example, the first AP 202 may change the non-primary channel to the recommended channel.

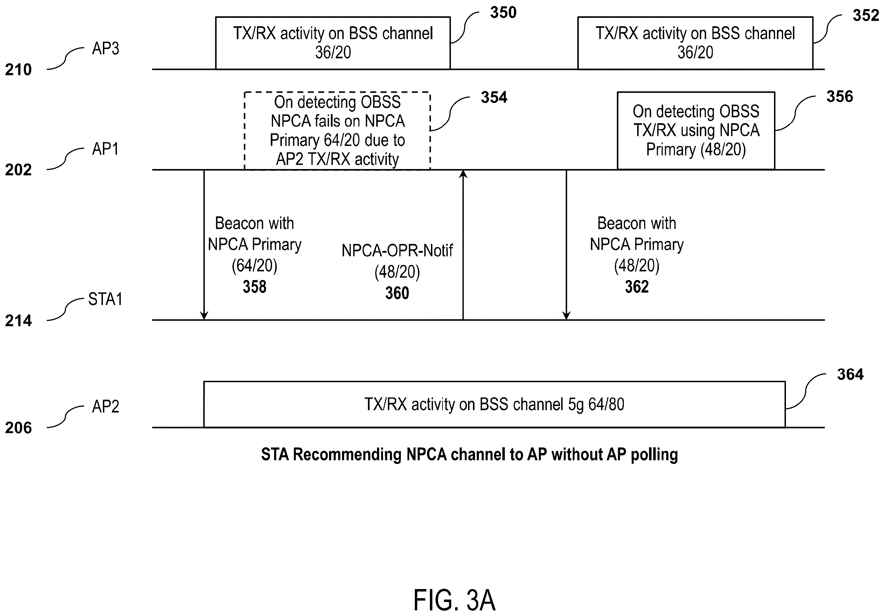

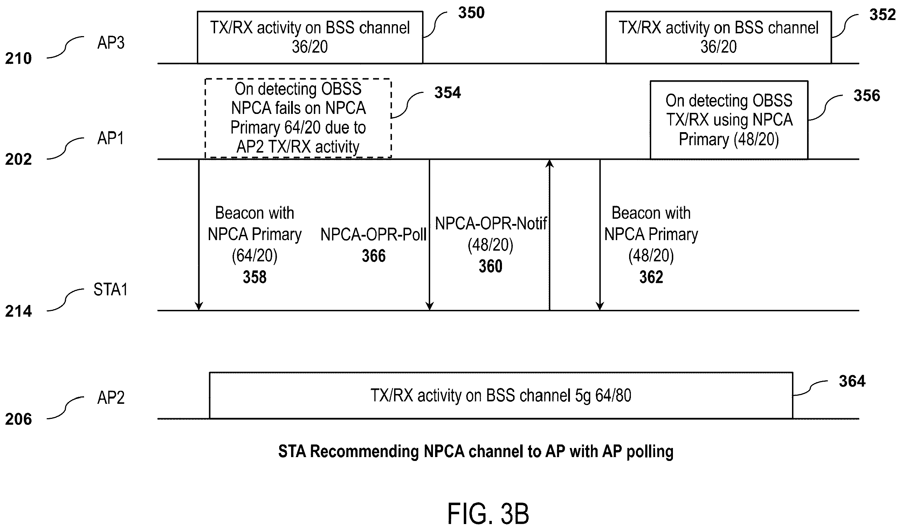

FIGS. 3A and 3B are block diagrams of embodiments of STA assisted NPCA operations. Communications 350-364 may represent communications between various STAs. For example, communications 350-364 can represent communications between a first AP 202 and a first STA 214, a second AP 206 and a second STA (e.g., the second STA 216 of FIG. 2), and a third AP 210 and a third STA (e.g., the third STA 218 of FIG. 2).

In some embodiments, communications may be transmitted and received over the various channels of a wireless network. For example, the third AP 210 may transmit and receive communications from a respective STA (e.g., the third STA 218 of FIG. 2). This can be represented by the channel 36/20 communications 350 and the channel 36/20 communications 352. As another example, the second AP 206 may transmit and receive communications from a respective STA (e.g., the second STA 216 of FIG. 2). This can be represented by the channel 64/80 communications 364. In some examples, channels may be 20 MHz wide. In these examples, the channel 36/20 communications 350 and 352 may take one channel while the channel 64/80 communications 364 may occupy four channels. As an example, the channel 64/80 communications 364 can include transmissions from 5280 MHz to 5360 MHz, and this may occupy channels 52-64.

In some embodiments, the first AP 202 may detect that there is Overlapping Basic Service Set (OBSS) interference. OBSS interference may refer to overlap between primary channels of multiple APs that have at least partial range overlap. For OBSS interference to occur, ranges of two APs may overlap, and a device (e.g., one of the APs and/or an STA that one of the STAs is communicating with) may be located in the overlapping region. In an example, the first AP 202 may detect that there is activity on channel 36 based on the channel 36/20 communications 350. For example, channel 36/20 may be the BSS primary channel of the first AP 202. The first AP 202 may initially elect to execute communications with the first STA 214 via the BSS primary channel. The first AP 202 may detect that there is OBSS interference with another device (e.g., the third AP 210) on channel 36 based on signal strength analysis, channel utilization monitoring, and/or the like. In response to determining that there is OBSS interference on its BSS primary channel (e.g., channel 36), the first AP 202 may elect to execute communications on an NPCA primary channel. The NPCA primary channel may be an alternative channel that the first AP 202 can use in place of the BSS primary channel when it is determined that there is interference on the BSS primary channel.

In some examples, the first AP 202 may transmit a frame, such as a beacon frame, indicating that communications will use the NPCA primary channel (e.g., channel 64). For example, the first AP 202 may transmit a beacon frame 358 to the first STA 214, indicating the channel and bandwidth of the NPCA primary channel for executing communications. However, in some examples, the first STA 214 may have a limitations transmitting at the NPCA primary channel. This limitations may be due internal features (e.g., hardware limitations, firmware issues, configuration errors, and/or the like) or external factors (e.g., OBSS interference, regulatory restrictions, physical obstructions, and/or the like). The limitation may prevent the first STA from operating in the NPCA primary channel or cause significant network degradation for the first STA 214 within the NPCA primary channel. In some examples, the first STA 214 can identify the limitation. For example, the first STA 214 can identify that there is OBSS with the second AP 206 based on the channel 64/80 communications 364. For example, due to the channel 64/80 communications 364 there may be interference on channel 64. The first STA 214 may determine that there is OBSS interference on channel 64 based on detecting collisions with the beacon frame 358 (e.g., through protocols such as Carrier Sense Multiple Access (CSMA)), detecting high channel utilization, and/or the like.

In some embodiments, the first STA 214 may notify the first AP 202 that it has a limitation on the NPCA primary channel indicated by the beacon frame 358 by transmitting notification frame 360. For example, in response to receiving the beacon frame 358 recommending channel 64/20, the first STA 214 may identify that there is OBSS interference on channel 64 due to channel 64/80 communications 364 between the second AP 206 and the second STA. In an example, the notification frame 360 may be a management frame defined by the IEEE 802.11bn standard. In another example, the notification frame 360 may be an action frame that is specific to a vendor associated with the first STA 214.

The notification frame 360 can include information associated with the identified OBSS interference. For example, the notification frame 360 can include one or more elements that identify which channels the OBSS is associated with, which device the interference is associated with, how strong the interference is, and/or the like. In an example, the notification frame 360 can include one or more operating classes and/or channels (e.g., 20 MHz channels) that the first STA 214 has detected OBSS interference in. In an example, the notification frame 360 can include a Basic Service Set Identifier (BSSID) of an AP associated with the OBSS. For example, the notification frame 360 can include a media access control (MAC) address associated with the second AP 206. Additionally, or alternatively, the notification frame 360 can include a BSS color associated with the second AP 206. The BSS color may be a six-bit identifier included in transmissions of the second AP 206 that identify that the transmission is associated with the second AP 206. In an example, the notification frame 360 can include a Received Signal Strength Indicator (RSSI) value of interfering APs. For example, the notification frame 360 can include an RSSI value of the second AP 206. The RSSI value can indicate a power level of signals transmitted by the second AP 206. In an example, the notification frame 360 can include a recommendation of a new NPCA primary channel. For example, based on the channels in which the first STA 214 identifies OBSS interference, the first STA 214 may identify channels where there is no (e.g., or sufficiently small) OBSS interference. The first STA 214 may then generate a recommendation of one or more channels from the identified group of channels. This recommendation can be included in the notification frame 360.

In some embodiments, the first AP 202 may receive a notification frame 360 from the first STA 214 that indicates a recommendation of a new NPCA primary channel. In these embodiments, the first AP 202 may either accept or reject the recommendation. In an example, where the first AP 202 rejects the recommendation, the first AP 202 may renegotiate the new NPCA primary channel. The first AP 202 may renegotiate due to OBSS interference that the first STA 214 cannot detect (e.g., due to only the first AP 202 being within the range of the OBSS interference) or standards (e.g., IEEE standards, regulatory standards, and/or the like) that the first AP 202 manages. In an example, the first AP 202 may renegotiate the NPCA primary channel by sending a subsequent beacon that recommends a third channel as the new NPCA primary channel. In response to this subsequent beacon, the first STA 214 can transmit a subsequent notification frame. This process may repeat until the notification frame transmitted by the first STA 214 is accepted by the first AP 202.

In some embodiments, the first AP 202 may determine a new NPCA primary channel based on the OBSS information included in the notification frame 360. For example, the first AP 202 may determine where the NPCA primary channel should be shifted based on operating classes and/or channels that the notification frame 360 indicates have OBSS interference. As an example, the first AP 202 may identify a sub band (e.g., group of channels within an operating class) that the NPCA should be shifted to based on this information. In some examples, the first AP 202 may identify APs associated with the OBSS interference based on BSSID and/or BSS color information included in the notification frame 360. The first AP 202 may not detect APs that are causing OBSS interference with the first STA 214 itself if it is not within range of those APs. For example, the first AP 202 may not detect the second AP 206 because while the first STA 214 is within range (e.g., the second range 208 of FIG. 2) of the second AP 206, the first AP 202 is not. In some examples, the first AP 202 may adjust transmission parameters based on an RSSI of an interfering AP included in the notification frame 360. For example, based on the signal strength of the transmissions from the second AP 206 indicated by RSSI information in the notification frame 360, the first AP 202 can adjust transmission parameters (e.g., power, modulation and coding schemes, and/or the like) to improve performance on the NPCA primary. These adjustments may improve performance of the transmissions to the first STA 214 on the original NPCA primary channel, which may allow communications with between the first AP 202 and the first STA 214 to proceed on this channel.

In some embodiments, the first STA 214 may implement mitigation steps. Mitigation steps can include roaming, using a multi-link operation channel with the first AP 202, switching to another AP, and/or the like. In an example, the first STA 214 may implement one or more mitigation steps in response to the first AP 202 failing to change the NPCA primary channel based on the recommendation included in the notification frame 360. Additionally, or alternatively, the first STA 214 may implement one or more mitigation steps in response to the first AP 202 failing to acknowledge the notification frame 360.

In some embodiments, the first AP 202 may poll the first STA 214 for a recommendation on a new NPCA primary channel. For example, at interference block 354, the first AP 202 may determine that there is OBSS interference on channel 64 (e.g., due to channel 64/80 communications 364 associated with the second AP 206). The interference may be detected based on failing to receive an acknowledgement frame to the beacon frame 358, detecting collisions with the beacon frame 358 (e.g., through protocols such as Carrier Sense Multiple Access (CSMA)), detecting high channel utilization, and/or the like. In an example, the first AP 202 can determine that the NPCA primary channel has failed due to the OBSS. In some examples, the first AP 202 may pause transmissions in response to determining the NPCA primary channel (e.g., channel 64/20) failed. For example, the first AP 202 may pause transmissions and wait for a notification frame, such as the notification frame 360, to be transmitted from the first STA 214. Alternatively, the first AP 202 may poll the first STA 214 for a recommendation on a new NPCA primary channel in response to determining that the new NPCA primary channel failed. For example, the first AP 202 can transmit a poll frame 366 that requests a recommendation for a new NPCA primary channel. The poll frame 366 may be a management frame defined by the IEEE 802.11bn standard or an action frame specific to a vendor associated with the first AP 202. In this example, the first STA 214 can transmit the second beacon frame 362 including a recommendation for the new NPCA primary channel in response to the poll frame 366.

In some embodiments, the first AP 202 may transmit a second beacon frame 362 that indicates the new NPCA primary channel. The channel may be assigned based on a recommendation included in the notification frame 360. As depicted in FIGS. 3A-3B, the new NPCA primary channel is channel 48/20. The first AP 202 can then proceed with transmitting and receiving information from the first STA 214 using the new primary NPCA primary channel as part of channel 48/20 communications 356.

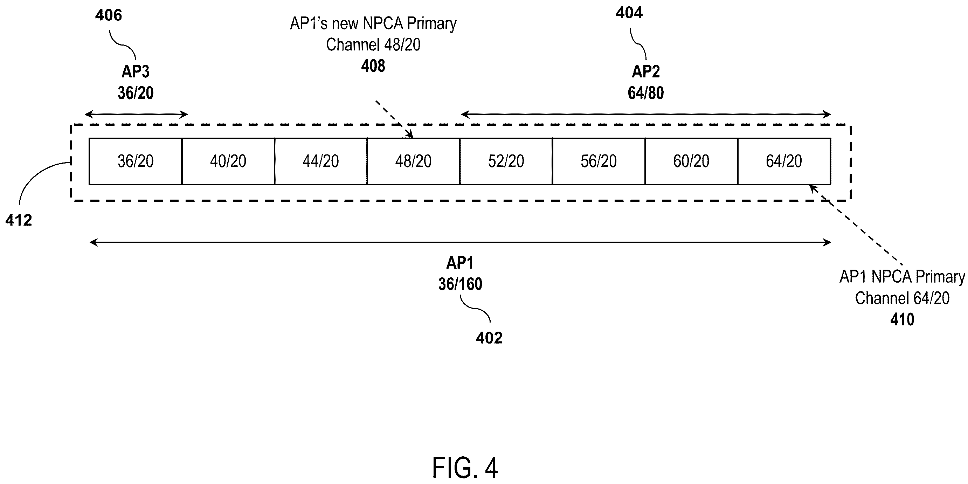

FIG. 4 is a block diagram of a set of channels that an AP may transmit data over. For example, a set of channels 412 may define a set of frequency ranges within which devices of a basic service set (BSS) can communicate. In an example, the set of channels 412 may define a set of channels within a 5 GHz band. In this example, each channel in the set of channels 412 may define a 20 MHz wide range within the 5 GHz band. As an example, channel 36 can define a range between 5170 MHz and 5190 MHz. Devices within a BSS may include one or more non-AP STAs (e.g., first STA 214 of FIG. 2) and an AP (e.g., first AP 202 of FIG. 2) that communicate on a designated channel (e.g., the BSS primary channel).

In some examples, the BSS primary channel may be a single channel. For example, a BSS primary channel 406 of the third AP (e.g., the third AP 210 of FIG. 2) may be channel 36, and may be 20 MHz wide. As a result, communications of the third AP with associated devices (e.g., the third STA 218 of FIG. 2) may be executed between 5170 MHz and 5190 MHz. In some examples, the BSS primary channel may be several channels bonded together. For example, a BSS primary channel 402 of the first AP (e.g., the first AP 202 of FIG. 2) may be channel 36 and may be 160 MHz wide. As a result 8 channels (e.g., channels 36 to 64) may be bonded together to create a 160 MHz wide channel. As another example, a BSS primary channel 404 of the second AP (e.g., the second AP 206 of FIG. 2) may be channel 64 and may be 80 MHz wide. As a result, 4 channels (e.g., channels 52 to 64) may be bonded together to create an 80 MHz wide channel. Wider channels, such as the BSS primary channel 402 may transmit more data simultaneously, which can result in faster data transfer rates for both uploading and downloading data to a network than narrower channels, such as the BSS primary channel 406. However, narrower channels like the BSS primary channel 406 may be less prone to interference since they occupy a smaller portion of the frequency spectrum.

In some embodiments, the BSS primary channels of one or more BSSs can overlap, which can cause OBSS interference. For example, the BSS primary channel 402 of the first AP and the BSS primary channel 406 of the third AP overlap. As another example, the BSS primary channel 402 of the first AP and the BSS primary channel 404 of the second AP may overlap. This can cause OBSS interference if the AP and/or a device it is transmitting to is within the range of the AP with which it overlaps. For example, there may be OBSS interference if the first STA with which the first AP is communicating is within range of the second AP. OBSS interference can cause various issues with data transmission, such as collision of data packets and long medium contention times which can degrade network performance.

In some embodiments, an AP may have NPCA capabilities. In these examples, the AP may have a designated secondary channel (e.g., NPCA primary channel) that can be used for transmissions when there is an issue (e.g., such as OBSS interference) with the BSS primary channel. As an example, due to the relatively large bandwidth of the BSS primary channel 402, it may be likely that there is OBSS interference with the BSS of another AP. As illustrated in FIG. 4, The BSS primary channel 402 overlaps with both the BSS primary channel 406 of the third AP and the BSS primary channel 404 of the second AP. In response to determining that there is OBSS interference on the BSS primary channel 402, the first AP may elect to execute communications on an NPCA primary channel, such as the NPCA primary channel 410.

In some embodiments, the first AP may select an NPCA primary channel based on detected OBSS. For example, the first AP may be within range (e.g., the third range 212 of FIG. 2) of the third AP. The first AP may therefore detect communications of the third AP and determine there is OBSS interference at channel 36 with the third AP. Based on the detected OBSS interference, the first AP can select a channel other than channel 36 as the NPCA primary channel 410. As depicted in FIG. 4, the first AP can select channel 64 with a bandwidth of 20 MH as the NPCA primary channel. The first AP can transmit a beacon frame (e.g., beacon frame 358 of FIG. 3A) indicating that the NPCA primary channel 410 will be the BSS primary channel of the BSS to the first STA. However, the first AP may not detect the OBSS interference with the second AP. For example, the first STA may be within range (e.g., the second range 208 of FIG. 2) of the second AP, however the first AP may not be within this range. In this example, the first AP and/or first STA can detect that there is an issue (e.g., collisions with data associated with communications of the second AP) with the beacon frame that indicate OBSS interference. In response to determining that there is an issue with the NPCA primary channel 410 that the beacon frame was transmitted at, the first STA can suggest a new NPCA primary channel. For example, the first STA can detect that there is OBSS interference with the second AP at channel 64 and then transmit a notification frame recommending a new NPCA primary channel 408 that does not overlap with the BSS primary channel 404 of the second AP. In an example, the notification frame can be sent in response to a poll from the first AP requesting a recommendation for a new NPCA primary channel. In some examples, the first AP can send out a new beacon frame designating the new NPCA primary channel based on the recommendation of the first STA. The BSS associated with the first AP can thereby be designated as the new NPCA primary channel. As a result, the first AP can operate on a BSS primary channel that does not overlap with the BSS primary channel 404 of the second AP or the BSS primary channel 406 of the third AP.

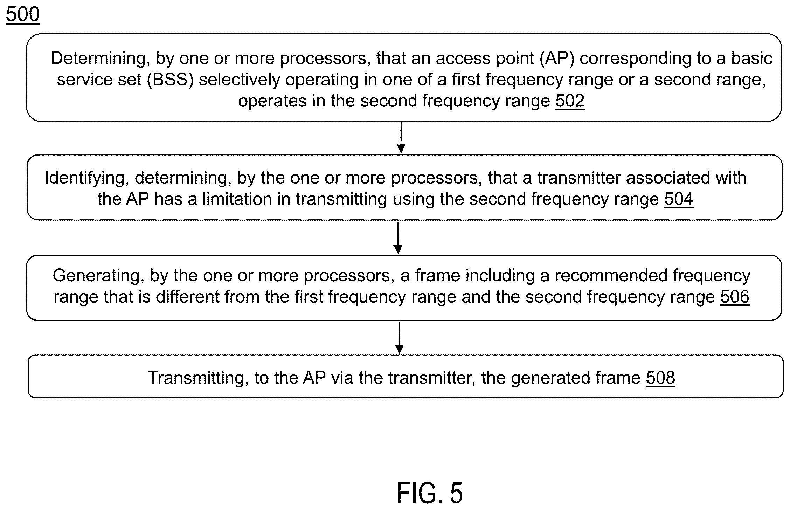

FIG. 5 is a flowchart showing a process 500 for mitigating congestions utilizing NPCA operations. In some implementations, the process 500 is performed by one or more processors (e.g., main processor 121, and/or the like). In other embodiments, the process 500 includes more, fewer, or different steps than shown in FIG. 5.

At step 502, the processors may determine that an AP corresponding to a basic service set (BSS) that selectively operates in one or a first or second frequency range operates in the second frequency range. The term AP may refer to a Wi-Fi enabled access point such as a NETGEAR WAC104, TP-Link EAP225, or any other circuitry or device that creates a wireless local area network (WLAN). The term BSS may refer to a set of devices including an AP and associated STAs that communicate over a BSS primary channel within a Wi-Fi network, or any other group of devices that communicate wirelessly over one or more specified channels. The term frequency range may refer to a Wi-Fi channel, operating set, or any other specified frequency range that wireless communications can take place at. In an example, the AP (e.g., the first AP 202 of FIG. 2) may set the channel of its BSS to the second frequency range (e.g., the NPCA primary channel 410 of FIG. 4) in response to determining that there are limitations on the first range (e.g., the BSS primary channel 402 of FIG. 4). In an example, the AP may have Ultra-High Resource (UHR) capabilities including non-primary channel access (NPCA) that allow communications to be executed on either a first or second frequency range. In this example, the second frequency range may be an alternative channel, such as NPCA primary channel, that the AP can be programmed to use instead of the first frequency range. In some examples, the AP can determine that there is overlapping BSS with the first frequency range and the frequency range of another BSS associated with another AP. For example, the AP can detect that it is within range of another AP that operates within at least part of the first frequency range based on detecting transmissions of the other AP. In response, the AP can select to operate at the second frequency range.

At step 504, the processors may determine that a transmitter associated with the AP has a limitation in transmitting using the second frequency range. The AP may be associated with one or more transmitters. The term transmitter refers to a non-AP STA such as a smartphone, laptop, gaming console, or any other circuitry or device that wirelessly transmits data to the AP. In an example, one of the transmitters may have limitations on the second frequency range. The term limitation can refer to OBSS interference, hardware limitations, regulation limitations, or any other aspect of the transmitter that prevent or limit its transmissions on a frequency range. In an example, after selecting to operate in the second frequency range, the AP may transmit a beacon frame (e.g., beacon frame 358 of FIG. 3B) indicating that transmissions of the BSS will take place in the second frequency range (e.g., NPCA primary channel). However, due to limitations of the transmitter on the second frequency range, there may be issues with the transmission, such as packet loss or corruption. Based on the issues with the transmission, the transmitter and/or AP can identify that the second transmitter has the limitation on the second frequency range.

In some embodiments, the limitation may be due to interference with an overlapping BSS (OBSS). In an example, the BSS of the AP may overlap with the BSS of another AP. This may cause OBSS interference between transmissions to the transmitter if the transmitter and/or AP is located within an area where the ranges of the two APs overlap (e.g., the overlap between the first range 204 and the second range 208 of FIG. 2). In some examples, only the transmitter may be located in the overlapping region. As a result, the AP may not detect the presence of OBSS or may not detect OBSS interference until data is transmitted to the transmitter. Additionally, the AP may not detect which frequency the transmitter is experiencing OBSS interference on, since only the transmitter is within range of the other AP.

At step 506, the processors may generate a frame including that recommends a frequency range that is different from both the first and second frequency range. For example, the transmitter can identify a third frequency range that is different from both the first and second frequency range in response to determining that it has the limitation transmitting on the second frequency range. In an example, the transmitter can identify that the limitation is due to OBSS interference, and identify which frequencies there is OBSS interference on based on detecting transmissions from the other AP. The transmitter may then identify a third frequency range that does not overlap with the frequencies where OBSS interference is detected. In an example, the transmitter may generate a frame (e.g., notification frame 360 of FIG. 3A) that recommends the third frequency range. The term frame can refer to a management frame, action frame, or any other data that communicates information to the AP.

In some embodiments, the frame may be a management frame. For example, the frame may be a management frame specified by the IEEE 802.11bn specification. Alternatively, the frame may be a vendor-specific action frame. For example, the frame may carry custom information and instructions tailored to a vendor associated with the transmitter (e.g., STA) that generates the frame. In this example, the frame can include an organization identifier that identifies the vendor.

In some embodiments, the frame can indicate other information about the OBSS interference. For example, the frame can include at least one of a frequency range, BSS identifier (BSSID), BSS color, and/or received signal strength indicator (RSSI) of the OBSS. In an example, the transmitter can determine a frequency range of the OBSS interference based on detecting transmissions of the other AP. In this example, the transmitter can indicate this information as part of the generated frame. In another example, the transmitter can identify a BSSID of the transmissions of the other AP. The BSSID can identify the BSS of the other AP (e.g., the second AP 206 of FIG. 2) that is hidden (e.g., out of range) of the AP to the AP. Similarly, the frame can include a BSS color associated with the BSS of the other AP, which can also identify this BSS. In yet another example, the frame can include the RSSI of the OBSS.

At step 508, the transmitter may transmit the generated frame to the AP. In some examples, the frame may be generated and transmitted in response to the transmitter identifying the limitation on the second frequency range. Alternatively, the frame may be generated and transmitted to the AP in response to a poll (e.g., poll frame 366 of FIG. 3B) sent by the AP. For example, in response to determining that there is an issue with the beacon frame notifying the transmitter that the AP is operating in the second frequency range, the AP may transmit a poll requesting a recommendation of a new frequency range.

In some embodiments, the transmitter may receive a second frame from the AP that indicates whether the recommended frequency range is accepted or rejected. For example, in response to receiving the frame, the AP may determine whether the recommended frequency range should be accepted. In an example, the transmitter may recommend a frequency range that is not preferrable (e.g., due to regulations, hardware limitations of the AP, OBSS interference that is hidden to the transmitter, and/or the like). In this example, the AP may reject the recommendation. The AP may attempt to renegotiate the second frequency range by recommending a fourth frequency range to replace the second frequency range. The second frame can include the recommendation of the fourth frequency range along with the indication that the recommended frequency range is rejected. Alternatively, the recommended frequency range may be acceptable. In these examples, the AP may generate a second beacon frame (e.g., second beacon frame 362 of FIG. 3A) indicating that the recommended frequency range will be the new NPCA primary channel of the BSS as the second frame and transmit it to the transmitter. In an example, the AP may adjust other aspects of transmissions, such as transmission power or modulation scheme. For example, the AP may adjust aspects of transmissions in response to rejecting the recommended frequency range. These adjustments may be based on information about the OBSS interference included in the generated frame.

In some embodiments, the transmitter and/or AP may set the second frequency range to the recommended frequency range in response to the AP accepting the recommended frequency range. For example, the transmitter may be configured to transmit data on the channel (e.g., or channels) represented by the recommended frequency range in response to receiving the second beacon frame. Similarly, the AP may set the recommended frequency range as its NPCA primary channel in response to determining that the recommended frequency range is appropriate.

In some embodiments, the transmitter and/or AP can perform mitigation operations. For example, in response to determining that the transmitter has a limitation in transmitting using the second frequency range, processors can perform mitigation operations that can mitigate the effects of the limitation. In an example, mitigation operations can include setting the second frequency range to the recommended frequency range. For example, in response to determining that the transmitter has a limitation in the second frequency range, the AP can set the second frequency range to a new range recommended by the transmitter.

In some examples, the AP may reject the recommendation of the transmitter. In these, the AP and/or transmitter may perform mitigation operations that maintain the second frequency range as the frequency range of the AP but change other parameters of transmission. This may allow for the second frequency range to provide an acceptable communication channel despite the limitations of the transmitter or allow the transmitter to transmit data over other communication channels. In an example, mitigation operations can include associated with another AP. For example, in response to determining that the transmitter has a limitation in the second frequency range, the transmitter can associate with another AP that is different from the AP (e.g., the AP that it is currently associated with). As an example, in response to determining that there is a limitation in a second frequency range (e.g., NPCA primary channel of the AP), the transmitter (e.g., the first STA 214 of FIG. 2) may connect with another AP (e.g., the second AP 206 of FIG. 2, where the second AP 206 can facilitate connection to the same network as the first AP 202) in place of the AP (e.g., the first AP 202 of FIG. 2). In an example, some transmitters can have roaming capabilities that allow them to switch between APs within the same network. This can facilitate uninterrupted connection to the network, and may allow the transmitter to bypass limitations of one AP by connection to another AP. In another example, mitigation operations can include adjusting transmission (TX) parameters. For example, the AP and/or transmitter can increase TX power of transmissions in response to determining that the transmitter has a limitation on the second frequency range. Increasing TX power can help overcome limitations such as OBSS interference by making transmissions easier to distinguish from overlapping signals from nearby networks.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A device comprising:
a transmitter associated with an access point, AP, corresponding to a basic service set, BSS, selectively operating in one of a first frequency range or a second range; and
one or more processors configured to:
determine that the AP operates in the second frequency range;
determine that the transmitter has a limitation in transmitting using the second frequency range;
generate a frame including a recommended frequency range that is different from the first frequency range and the second frequency range; and
transmit, to the AP via the transmitter, the generated frame.

2. The device of claim 1, wherein
the frame is a management frame or a vendor-specific action frame.

3. The device of claim 1 or 2, wherein
the limitation is due to an interference with an overlapping BSS, OBSS.

4. The device of claim 3, wherein
the frame includes at least one of a frequency range, a BSS identifier, BSSID, a BSS color, a received signal strength indicator, RSSI, of the OBSS.

5. The device of any one of the claims 1 to 4, wherein the one or more processors are configured to:
receive, from the AP, a second frame indicating to accept or reject the recommended frequency range.

6. The device of claim 5, wherein
in response to the second frame indicating to accept the recommended frequency range, the one or more processors are configured to
set the second frequency range to the recommended frequency range.

7. The device of claim 5 or 6, wherein
in response to the second frame indicating to reject the recommended frequency range, the one or more processors are further configured to perform at least one of operations comprising:
associating with another AP different from the AP that the transmitter is presently associated with; and
adjusting one or more transmission, TX, parameters.

8. An access point, AP, comprising:
a transmitter corresponding to a basic service set (BSS) selectively operating in one of a first frequency range or a second frequency range; and
one or more processors configured to:
determine that the transmitter has a first limitation in transmitting using the first frequency range and a second limitation in transmitting using the second frequency range;
generate a frame requesting one or more recommended frequency ranges that are different from the first frequency range and the second frequency range; and
transmit, to one or more devices associated with the AP via the transmitter, the generated frame;
wherein in particular
the frame is a management frame or a vendor-specific action frame.

9. The AP of claim 8, wherein the one or more processors are configured to:
in response to transmitting the generated frame, receive, from the one or more devices, a second frame including a recommended frequency range.

10. The AP of claim 9, wherein
the second limitation is due to an interference with an overlapping BSS, OBSS, and
the second frame includes at least one of a frequency range, a BSS identifier, BSSID, a BSS color, a received signal strength indicator, RSSI, of the OBSS;
and/or wherein
in response to the second frame, the one or more processors are configured to perform at least one of operations comprising:
setting the second frequency range to the recommended frequency range; and
adjusting one or more transmission, TX, parameters.

11. The AP of claim 9 or 10, wherein the one or more processors are configured to
transmit, to the one or more devices, a third frame including the recommended frequency range.

12. A method comprising:
determining, by one or more processors, that an access point, AP, corresponding to a basic service set, BSS, selectively operating in one of a first frequency range or a second range, operates in the second frequency range;
determining, by the one or more processors, that a transmitter associated with the AP has a limitation in transmitting using the second frequency range;
generating, by the one or more processors, a frame including a recommended frequency range that is different from the first frequency range and the second frequency range; and
transmitting, to the AP via the transmitter, the generated frame.

13. The method of claim 12, wherein
the frame is a management frame or a vendor-specific action frame.

14. The method of claim 12 or 13, wherein
the limitation is due to an interference with an overlapping BSS, OBSS;
wherein in particular
the frame includes at least one of a frequency range, a BSS identifier (BSSID), a BSS color, a received signal strength indicator (RSSI) of the OBSS.

15. The method of any one of the claims 12 to 14, further comprising:
receiving, from the AP, a second frame indicating to accept or reject the recommended frequency range;
wherein in particular the method further comprises
(A) in response to the second frame indicating to accept the recommended frequency range, setting the second frequency range to the recommended frequency range;
and/or
(B) performing, in response to the second frame indicating to reject the recommended frequency range, at least one of operations comprising:
associating with another AP different from the AP that the transmitter is presently associated with; and
adjusting one or more transmission (TX) parameters.
